# EUROPÄISCHE PATENTANMELDUNG

(11) **EP 1 939 474 A1**
(43) Veröffentlichungstag der Anmeldung: **02.07.2008**
(21) Anmeldenummer: 07018777.8
(22) Anmeldetag: 25.09.2007
(51) Int. Cl.: F16D 3/10

(54) **Drehmomentübertragungsanordnung, insbesondere zur Drehmomentübertragung in einem Fahrzeug**

(30) Priorität: 05.10.2006 DE 102006047089
(71) Anmelder: ZF Friedrichshafen AG, 88038 Friedrichshafen (DE)
(72) Erfinder: Wickel, Christian, 97797 Wartmannsroth (DE)

(57) **Zusammenfassung**

Eine Drehmomentübertragungsanordnung, insbesondere zur Drehmomentübertragung in einem Fahrzeug, umfasst ein erstes Drehelement (12), ein zweites Drehelement (14) und eine Torsionseinheit (32), welche das erste Drehelement (12) und das zweite Drehelement (14) zur gemeinsamen Drehung um eine Drehachse (A) koppelt, wobei die Torsionseinheit (32) wenigstens ein bei Drehung der Drehelemente (12, 14) um die Drehachse (A) und bei zu übertragendem Drehmoment um eine erste Torsionsachse tordierbares Torsionselement (34) umfasst, ferner umfassend eine erste Relativdrehwinkelbegrenzungsanordnung (36) zur Begrenzung des Relativdrehwinkels zwischen dem ersten Drehelement (12) und dem zweiten Drehelement (14).

## Beschreibung

Die vorliegende Erfindung betrifft eine Drehmomentübertragungsanordnung, wie sie beispielsweise in einem Fahrzeug, wie z. B. Nutzkraftwagen, eingesetzt werden kann, um ein Drehmoment zu übertragen.

In Fahrzeugen wird das von einem Antriebsaggregat, beispielsweise einer Brennkraftmaschine, gelieferte Drehmoment einerseits in einen Antriebsstrang eingeleitet, um einen Vortrieb zu ermöglichen, und wird andererseits beispielsweise an einem Nebenabtriebsende in eine Nebenabtriebswelle oder dergleichen eingeleitet, um Zusatzaggregate, wie z. B. ein Lüftergetriebe, eine Klimaanlage oder dergleichen, zu betreiben. Dabei besteht allgemein das Problem, dass aufgrund der im Drehbetrieb auftretenden Drehungleichförmigkeiten, im Wesentlichen erzeugt durch Drehmomentschwankungen, in verschiedenen angetriebenen Systembereichen, wie z. B. einem Lüftergetriebe, Klappergeräusche entstehen können und vergleichsweise hohe Belastungen durch die Drehschwingungen auftreten.

Es ist die Aufgabe der vorliegenden Erfindung, eine Drehmomentübertragungsanordnung bereitzustellen, die insbesondere beim Einsatz in einem Fahrzeug bei einfachem konstruktiven Aufbau effektiv zur Minderung von Drehungleichförmigkeiten beitragen kann.

Erfindungsgemäß wird diese Aufgabe gelöst durch eine Drehmomentübertragungsanordnung, insbesondere zur Drehmomentübertragung in einem Fahrzeug, umfassend ein erstes Drehelement, ein zweites Drehelement und eine Torsionseinheit, welche das erste Drehelement und das zweite Drehelement zur gemeinsamen Drehung um eine Drehachse koppelt, wobei die Torsionseinheit wenigstens ein bei Drehung der Drehelemente um die Drehachse und bei zu übertragendem Drehmoment um eine erste Torsionsachse tordierbares Torsionselement umfasst, ferner umfassend eine erste Relativdrehwinkelbegrenzungsanordnung zur Begrenzung des Relativdrehwinkels zwischen dem ersten Drehelement und dem zweiten Drehelement.

In eine erfindungsgemäß aufgebaute Drehmomentübertragungsanordnung ist also eine Elastizität integriert, nämlich dadurch, dass zumindest ein tordierbares Torsionselement vorgesehen ist. Drehmomentschwankungen können zumindest bis zu einem gewissen Grenzwert auf diese Art und Weise abgefangen werden, wobei vor allem aufgrund des Einsatzes eines tordierbaren Torsionselements eine sehr kompakte Bauweise geschaffen ist.

Vorteilhafterweise entspricht die erste Torsionsachse im Wesentlichen der Drehachse.

Bei einem sehr einfach zu realisierenden und vor allem hinsichtlich der Torsionscharakteristik in einem großen Bereich einstellbaren Ausgestaltungsform wird vorgeschlagen, dass die Torsionseinheit wenigstens ein stabartiges Torsionselement umfasst, das mit einem Stabende am ersten Drehelement festgelegt ist und mit dem anderen Stabende am zweiten Drehelement festgelegt ist. Allein durch die Auswahl der Länge, der Querschnittsabmessung und der Formgebung eines derartigen stabartigen Torsionselements wird eine Anpassbarkeit an verschiedenste Einsatzumgebungen möglich.

Ferner kann es zum Bereitstellen einer in sich abgeschlossenen Baugruppe vorteilhaft sein,wenn das erste Drehelement oder/und das zweite Drehelement wenigstens bereichsweise hohlwellenartig ausgebildet ist und in diesem Bereich das stabartige Torsionselement aufnimmt.

Bei einer alternativen Ausgestaltungsform wird vorgeschlagen, dass die Torsionseinheit wenigstens eine Schraubenfeder umfasst, die mit einem Federende am ersten Drehelement festgelegt ist und mit dem anderen Federende am zweiten Drehelement festgelegt ist.

Um größere Drehmomente übertragen zu können oder in definierter Art und Weise die Kennlinie vorgeben bzw. beeinflussen zu können, wird vorgeschlagen, dass die Torsionseinheit eine Mehrzahl von vorzugsweise ineinander geschachtelten Schraubenfedern umfasst. Hier können also beispielsweise bzw. vorteilhafterweise zwei ineinander geschachtelte Schraubenfedern vorgesehen sein, die jeweils mit ihren Federenden an den beiden Drehelementen festgelegt sind und somit parallel wirken.

Wenn dabei weiter vorgesehen ist, dass wenigstens zwei der Schraubenfedern bezüglich einander vorgespannt sind, kann ein weiterer elementarer Einfluss auf die Federkennlinie genommen werden.

Um dafür zu sorgen, dass in beiden Relativdrehrichtungen der Drehelemente im Wesentlichen gleiche Kraftkennlinien vorhanden sind, also die Dämpfungscharakteristik unabhängig von der Relativdrehrichtung ist, wird vorgeschlagen, dass wenigstens zwei der Schraubenfedern mit zueinander gegensinniger Wicklungsrichtung vorgesehen sind.

Um bei der erfindungsgemäß aufgebauten Drehmomentübertragungsanordnung auch eine gestufte Wirkcharakteristik bereitzustellen, bei welcher also in verschiedenen Drehmomentbereichen mit verschiedenen Schwingungsdämpfungsverhalten gearbeitet werden kann, wird vorgeschlagen, dass das erste Drehelement oder/und das zweite Drehelement um eine zweite Torsionsachse tordierbar ist, und dass wenigstens ein weiteres erstes Drehelement und wenigstens ein weiteres zweites Drehelement vorgesehen sind, wobei dem wenigstens einen weiteren ersten Drehelement und dem wenigstens einen weiteren zweiten Drehelement eine weitere Relativdrehwinkelbegrenzungsanordnung zugeordnet ist zum Ermöglichen einer Relativdrehung zwischen dem wenigstens einen weiteren ersten Drehelement und dem wenigstens einen weiteren zweiten Drehelement in einem Relativdrehwinkelbereich, welcher größer ist, als der durch die erste Relativdrehwinkelbegrenzungsanordnung ermöglichte Relativdrehwinkel zwischen dem ersten Drehelement und dem zweiten Drehelement. Hier bilden also das erste Drehelement und das zweite Drehelement dann, wenn durch die ihnen zugeordnete erste Relativdrehwinkelbegrenzungsanordnung eine weitere Relativdrehung nicht mehr möglich ist, selbst eine Torsionseinheit oder einen Teil einer Torsionseinheit, indem zumindest eines dieser Drehelemente tordierbar ist.

Beispielsweise kann dabei vorgesehen sein, dass das wenigstens eine weitere erste Drehelement mit dem ersten Drehelement fest verbunden ist und dass das wenigstens eine weitere zweite Drehelement mit dem zweiten Drehelement fest verbunden ist.

Um einen in sich geschlossenen Aufbau bereitstellen zu können, kann wiederum vorgesehen sein, dass das wenigstens eine weitere erste Drehelement oder/und das wenigstens eine weitere zweite Drehelement wenigstens bereichsweise hohlwellenartig ausgebildet ist und in diesem Bereich das erste Drehelement und das zweite Drehelement aufnimmt. Dabei ist es besonders vorteilhaft, wenn das wenigstens eine weitere erste Drehelement in einem von dem wenigstens einen weiteren zweiten Drehelement entfernten Ende mit dem ersten Drehelement verbunden ist und wenn das wenigstens eine weitere zweite Drehelement in einem von dem wenigstens einen weiteren ersten Drehelement entfernten Ende mit dem zweiten Drehelement verbunden ist.

Die zweite Torsionsachse kann im Wesentlichen der Drehachse entsprechen und kann somit im Wesentlichen auch der ersten Torsionsachse entsprechen.

Um in einfacher Art und Weise eine Torsionsüberlastung eines im Drehmomentübertragungszustand zu tordierenden Torsionselements vermeiden zu können, wird vorgeschlagen, dass wenigstens eine Relativdrehwinkelbegrenzungsanordnung an einem der Drehelemente wenigstens einen Drehwinkelbegrenzungsvorsprung umfasst und an dem anderen der Drehelemente in Zuordnung zu jedem Drehwinkelbegrenzungsvorsprung eine diesen mit Umfangsbewegungsspiel aufnehmende Drehwinkelbegrenzungsaussparung umfasst.

Anschlaggeräusche können dabei in einfacher Weise dadurch vermieden werden, dass im Bereich des wenigstens einen Drehwinkelbegrenzungsvorsprungs oder/und der diesem zugeordneten Drehwinkelbegrenzungsaussparung ein elastisches Anschlagdämpfungselement vorgesehen ist.

Weiter kann der Aufbau der erfindungsgemäßen Drehmomentübertragungsanordnung dadurch vereinfacht werden, dass wenigstens eine Relativdrehwinkelbegrenzungsanordnung ein Torsionselement der Torsionseinheit umfasst, wobei das Torsionselement mit wenigstens einem der durch dieses gekoppelten Drehelemente zur Drehwinkelbegrenzung zusammenwirken kann. Dies kann beispielsweise dadurch erfolgen, dass das wenigstens eine Drehelement eine Torsionsbewegungsbegrenzung für das Torsionselement aufweist. Insbesondere dann, wenn das wenigstens eine Torsionselement eine Schraubenfeder ist, kann dabei vorgesehen sein, dass die Torsionsbewegungsbegrenzung an dem wenigstens einen Drehelement eine die Schraubenfeder umgebende oder von dieser umgebene Anlagefläche umfasst.

Eine in Abhängigkeit vom Relativdrehwinkel und mithin in Abhängigkeit von dem zu übertragenden Drehmoment variierbare Elastizität im Bereich der Torsionseinheit kann gemäß einem weiteren Aspekt der vorliegenden Erfindung dadurch realisiert werden, dass der tordierbare Bereich der Torsionseinheit in Abhängigkeit von dem Relativdrehwinkel der Drehelemente variiert.

Bei Ausgestaltung eines Torsionselements als Schraubenfeder kann hierzu beispielsweise vorgesehen sein, dass an wenigstens einem der durch die wenigstens eine Schraubenfeder gekoppelten Drehelemente eine die wenigstens eine Schraubenfeder umgebende oder von dieser umgebene Anlagefläche vorgesehen ist, die einen in Richtung der ersten Torsionsachse variierenden Abstand zu der wenigstens einen Schraubenfeder aufweist. Aufgrund des unterschiedlichen Abstands einer Anlagefläche zu der Schraubenfeder wird diese bei Torsion nicht mit den Längenbereichen, die der Anlagefläche näher sind, zunächst an diese Anlagefläche anliegen und dort nicht weiter zur Elastizität beitragen können.

Das erste Drehelement und das zweite Drehelement können vermittels einer Lageranordnung bezüglich einander drehbar abgestützt sein, so dass definierte Reibverhältnisse bereitgestellt sind, wobei, je nach Anforderung, diese zur Minimierung der Reibung ausgebildet sein kann, also beispielsweise auch eine Wälzkörperlagerung oder ein Gleitlager umfassen kann, selbstverständlich aber auch in definierter Art und Weise ein Reibmoment erzeugen kann, um auf diese Art und Weise einen weiteren Beitrag zur Schwingungsdämpfung bereitstellen zu können.

Die vorliegende Erfindung wird nachfolgend mit Bezug auf die beiliegenden Zeichnungen detailliert beschrieben. Es zeigt:
- Fig. 1: eine perspektivische Ansicht einer Drehmomentübertragungsanordnung;
- Fig.2: eine Längsschnittansicht der in Fig. 1 dargestellten Drehmomentübertragungsanordnung;
- Fig. 3: eine der Fig. 2 entsprechende Ansicht einer Abwandlung der Drehmomentübertragungsanordnung;
- Fig. 4: eine perspektivische Ansicht einer weiteren Abwandlung einer Drehmomentübertragungsanordnung;
- Fig. 5: eine perspektivische Ansicht einer weiteren Abwandlung einer Drehmomentübertragungsanordnung;
- Fig.6: eine Längsschnittansicht der in Fig. 5 gezeigten Drehmomentübertragungsanordnung;
- Fig. 7: eine weitere perspektivische Ansicht einer alternativen Drehmomentübertragungsanordnung;
- Fig. 8: eine Längsschnittansicht der in Fig. 7 gezeigten Drehmomentübertragungsanordnung;
- Fig. 9: eine perspektivische Ansicht eines als Schraubenfeder ausgebildeten Torsionselements der in den Fig. 7 und 8 gezeigten Drehmomentübertragungsanordnung;
- Fig. 10: eine der Fig. 8 entsprechende Ansicht einer Abwandlung der Drehmomentübertragungsanordnung;
- Fig. 11: eine Längsschnittansicht einer Schraubenfeder als Torsionselement.

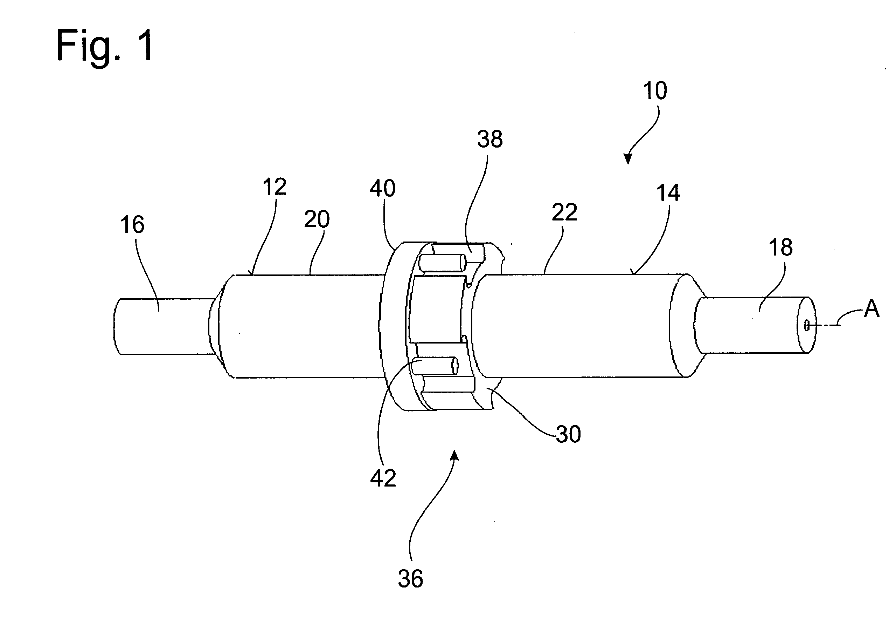

In Fig. 1 ist eine Drehmomentübertragungsanordnung allgemein mit 10 bezeichnet. Diese entlang einer Drehachse A langgestreckte Drehmomentübertragungsanordnung 10 kann beispielsweise in einem Fahrzeug, wie z. B. Nutzkraftwagen, dazu genutzt werden, an einem Nebenabtriebsende eines Antriebsaggregats ein Zusatzaggregat, wie z. B. ein Lüftergetriebe, anzutreiben.

Die Drehmomentübertragungsanordnung 10 umfasst zwei in Richtung der Drehachse A langgestreckte Drehelemente 12, 14. Diese beiden Drehelemente 12, 14 können in ihren voneinander entfernt liegenden Enden 16, 18 beispielsweise mit einer Antriebswelle, wie z. B. Kurbelwelle einer Brennkraftmaschine, einerseits und dem anzutreibenden Gerät, also beispielsweise einer Getriebeeingangswelle eines Lüftergetriebes oder dergleichen, andererseits verbunden werden. Die beiden Drehelemente 12, 14 sind in ihren einander zugewandt liegenden Längenbereichen 20, 22 hohlwellenartig ausgebildet und weisen dort jeweils einen Innenraum 24, 26 auf. Da die beiden Drehelemente 12, 14 mit ihren Längenbereichen 20, 22 unter Zwischenlassung eines nur geringen Spalts 28 einander gegenüberliegen, stellen die beiden Innenräume 24, 26 ein im Wesentlichen vollständig abgeschlossenes Innenvolumen bereit. Dies kann dadurch noch unterstützt werden, dass an einem der Drehelemente, im dargestellten Beispiel dem Drehelement 14, an seinem dem Drehelement 12 zugewandten Ende ein nachfolgend noch näher erläuterter Ring 30 vorgesehen ist, welcher am Längenbereich 22 des Drehelements 14 festgelegt ist, beispielsweise durch Verschweißung, und das dem Längenbereich 22 zugewandte Ende des Längenbereichs 20 des Drehelements 12 übergreift.

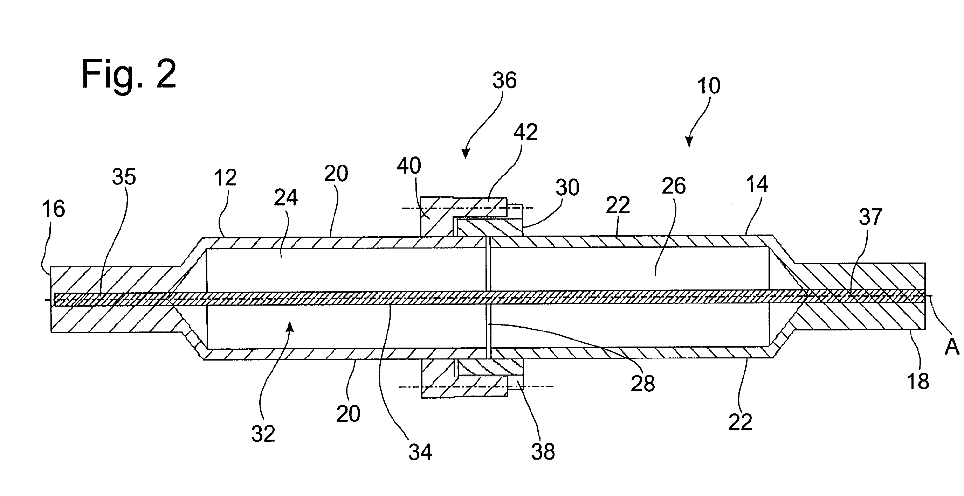

Um das Drehelement 12 mit dem Drehelement 14 zur gemeinsamen Drehung um die Drehachse A zu koppeln, umfasst bei der Ausgestaltungsform der Fig. 1 und 2 eine Torsionseinheit 32 ein langgestrecktes, stabartiges Torsionselement 34. Dieses ist mit einem ersten Stabende 35 am Drehelement 12 festgelegt, beispielsweise durch Einschieben oder Einpressen in eine entsprechend geformte Aussparung im Drehelement 12, und ist entsprechend auch mit seinem zweiten Stabende 37 am Drehelement 14 festgelegt.

Wird über die in den Fig. 1 und 2 gezeigte Drehmomentübertragungsanordnung 10 ein Drehmoment übertragen, beispielsweise in das Drehelement 12 eingeleitet und vom Drehelement 14 weitergeleitet, so erfolgt diese Drehmomentübertragung zwischen den beiden Drehelementen 12 und 14 über das stabartige Torsionselement 34. Aufgrund der Tordierbarkeit des Torsionselements 34 um seine Längsachse, die also einer Torsionsachse und aufgrund der konstruktiven Ausgestaltung auch der Drehachse A entspricht, kann abhängig von der Größe des zu übertragenden Drehmoments also eine Relativdrehung zwischen den beiden Drehelementen 12, 14 stattfinden. Vor allem kleinere Drehmomentschwankungen können somit durch entsprechende Relativoszillation der beiden Drehelemente 12, 14 bezüglich einander abgefangen und entsprechend gedämpft werden. Die Dämpfungscharakteristik kann dabei in weiten Bereichen durch die Gestaltung des Torsionselements 34 beeinflusst werden. Dabei ist selbstverständlich der tordierbare Längenbereich desselben wesentlich für die Tordierbarkeit. Ebenso sind selbstverständlich die Materialauswahl, die Materialstärke und die Formgebung des Torsionselements 34 maßgebend. So kann dieses beispielsweise nach Art eines Bandmaterials abgeflacht sein, kann selbstverständlich aber auch quadratisch oder vieleckig im Querschnitt sein oder rund bzw. elliptisch. Auch kann das Torsionselement 34 aus einer Mehrzahl von Einzelteilen, also beispielsweise einer Mehrzahl von blattfederartigen Bauteilen, zusammengesetzt sein. Beispielsweise kann zum Antrieb eines Lüftergetriebes in einem Nutzkraftwagen die Auslegung des Torsionselements 34 derart sein, dass bei einem Relativdrehwinkel von 25°, ausgehend von einer neutralen, drehmomentenfreien Relativpositionierung der beiden Drehelemente 12, 14 bezüglich einander, das übertragene Drehmoment bei 15 Nm liegen.

Um eine Überlastung des Torsionselements 34 zu vermeiden, ist der Torsionseinheit 32 eine Relativdrehwinkelbegrenzungsanordnung 36 zugeordnet. Diese umfasst den vorangehend bereits angesprochenen und am Drehelement 14 festgelegten Ring 30, der, wie vor allem auch in Fig. 1 zu erkennen ist, in Umfangsrichtung verteilt eine Mehrzahl von Drehwinkelbegrenzungsaussparungen 38 aufweist. Am Drehelement 12 ist nahe dem Ring 30 ebenfalls ein Ring 40 festgelegt, der als integrale Bestandteile oder in diesen eingesetzt eine Mehrzahl von näherungsweise in Richtung der Drehachse A sich erstreckenden und in die Drehwinkelbegrenzungsaussparungen 38 eingreifenden Drehwinkelbegrenzungsvorsprüngen 42 aufweist. Die Relativpositionierung kann dabei derart sein, dass bei nicht belastetem Torsionselement 34 jeder Drehwinkelbegrenzungsvorsprung 42 näherungsweise mittig in die ihn aufnehmende Drehwinkelbegrenzungsaussparung 38 eingreift. Auf diese Art und Weise kann eine Relativdrehung zwischen den beiden Drehelementen 12, 14 in beiden Relativdrehrichtungen und im gleichen Ausmaß stattfinden.

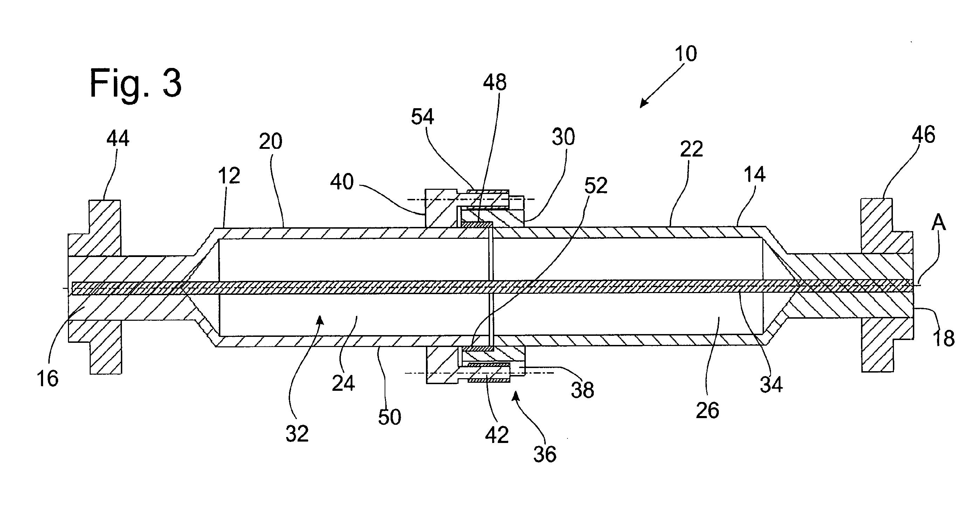

Eine weitere Ausgestaltungsform einer derartigen Drehmomentübertragungsanordnung 10 ist in Fig. 3 gezeigt. Man erkennt zunächst, dass die beiden Drehelemente 12, 14 an ihren voneinander entfernt liegenden und mit jeweils anderen Systembereichen zu koppelnden Enden Kopplungsscheiben 44, 46 tragen bzw. auch als integralen Bestandteil aufweisen können. Über diese Kopplungsscheiben 44, 46 kann eine Verschraubung beispielsweise mit einer Antriebswelle oder einer Abtriebswelle erfolgen.

Man erkennt in Fig. 3 weiter, dass die beiden Drehelemente 12, 14 unter Zwischenlagerung eines Lagers 48 radial bezüglich einander abgestützt sind. Dieses Lager 48 stützt die Außenumfangsfläche 50 des Drehelements 12 bezüglich einer Innenumfangsfläche 52 des mit dem Drehelement 14 fest verbundenen Rings 30 ab. Da bei Drehmomentübertragung über diese Drehmomentübertragungsanordnung 10 im Wesentlichen keine Radialkräfte auftreten, muss dieses Lager 48 auch nicht zur Aufnahme großer Querkräfte dimensioniert sein. Es kann beispielsweise als Gleitlagerring ausgebildet sein, kann jedoch auch als Wälzkörperlager realisiert sein. Auf diese Art und Weise kann bei Relativdrehung der beiden Elemente 12, 14 bezüglich einander deren Positionierung definiert beibehalten werden und somit insbesondere dafür gesorgt werden, dass die Torsionsachse des Torsionselements 34 im Wesentlichen exakt bei der Drehachse A liegen bleibt. Selbstverständlich ist es auch möglich, durch das Lager 48 bei entsprechender Materialauswahl eine definierte Reibung einzuführen, welche einer Relativdrehung der beiden Drehelemente 12, 14 entgegenwirkt und mithin bei Auftreten von Drehschwingungen zur Energieabfuhr beiträgt. Selbstverständlich ist es auch möglich, wie in Fig. 2 erkennbar, das Drehelement 12 direkt an dem Ring 30 abzustützen.

In Fig. 3 erkennt man weiter, dass die an dem Ring 40 vorgesehenen Drehwinkelbegrenzungsvorsprünge 42 jeweils von aus elastischem Material, beispielsweise Gummimaterial, aufgebauten Hülsen 54 umgeben sind. Auf diese Art und Weise wird bei Erreichen eines Grenzdrehwinkels ein sanfter, im Wesentlichen geräuschloser Anschlag der Drehwinkelbegrenzungsvorsprünge 42 am Ring 30 erreicht.

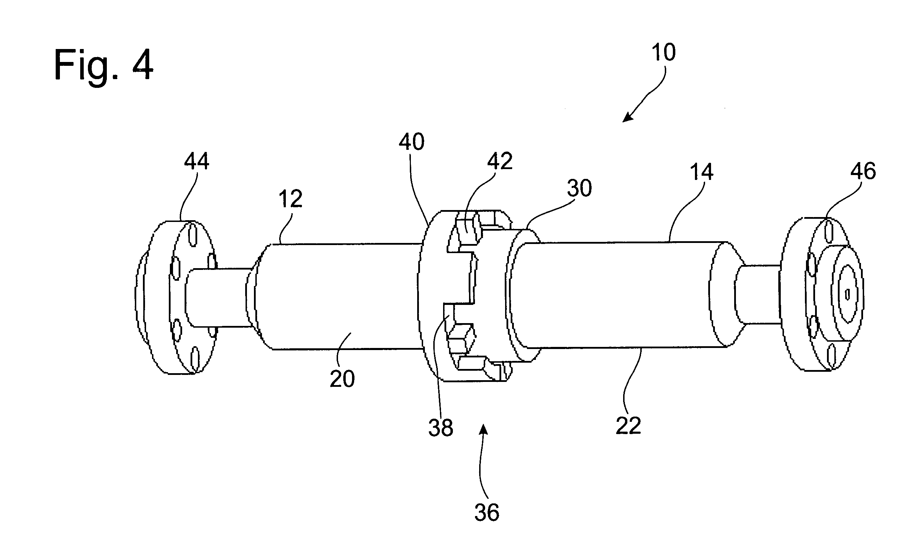

Eine weitere alternative Ausgestaltungsform ist in Fig. 4 gezeigt. Man erkennt hier im Unterschied zu den beiden vorangehend beschriebenen Ausgestaltungsformen, dass am Ring 30 mit rechteckigem Querschnitt ausgestaltete und im Wesentlichen nach radial außen sich erstreckende Drehwinkelbegrenzungsvorsprünge 42 vorgesehen sind, welche in Aussparungen 38 eingreifen, die am Ring 40 gebildet sind und die axial offen sind. Tatsächlich ist zu erkennen, dass die Relativdrehwinkelbegrenzungsanordnung 36 in allen Ausgestaltungsformen bereitgestellt ist durch verzahnungsartig ineinander eingreifende Vorsprünge, die zwischen sich jeweils Aussparungen bilden und ein dem gewünschten Relativdrehwinkel entsprechendes Umfangsbewegungsspiel bezüglich einander bereitstellen.

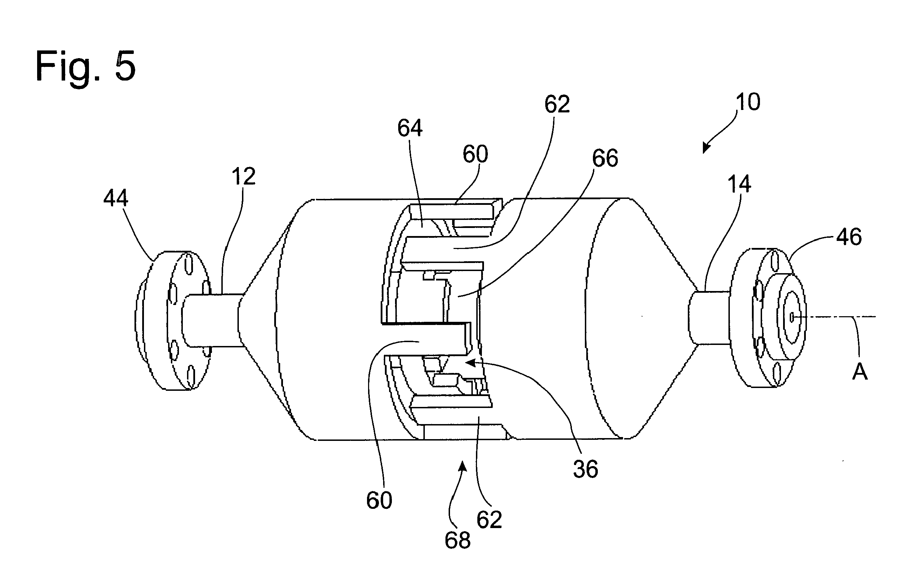

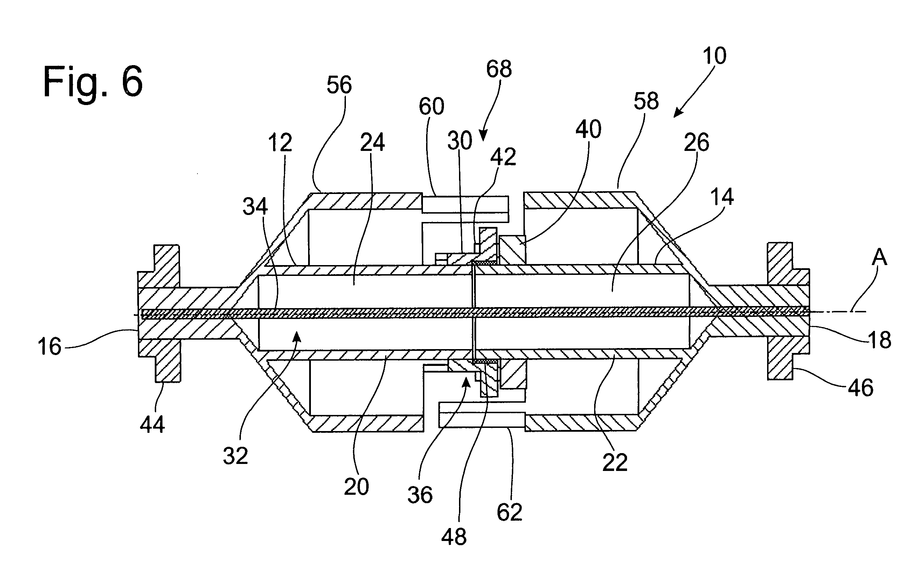

Eine weitere Ausgestaltungsform einer erfindungsgemäß aufgebauten Drehmomentübertragungsanordnung 10 ist in den Fig. 5 und 6 gezeigt. Man erkennt auch hier zunächst die Drehmomente 12, 14 mit ihren hohlwellenartig ausgebildeten Längenbereichen 20, 22. Der Ring 30, welcher gleichzeitig auch der Abstützung der beiden Drehelemente 12, 14 bezüglich einander dient, ist nunmehr am Drehelement 12 festgelegt und übergreift das Drehelement 14 radial außen unter Zwischenlagerung des Lagers 48. Der Ring 40 ist am Drehelement 40 getragen, wobei aufgrund im Wesentlichen gleichartiger Ausgestaltung der Drehelemente 12 und 14 diese Zuordnung beliebig ist.

Das Drehelement 12 ist von einem weiteren hohlwellenartig bzw. hülsenartig ausgebildeten Drehelement 56 umgeben, während das Drehelement 14 von einem entsprechenden weiteren hohlwellenartig bzw. hülsenartig ausgebildeten Drehelement 58 umgeben ist. Das weitere Drehelement 56 ist in seinem von dem anderen weiteren Drehelement 58 entfernten Ende mit dem Drehelement 12 fest verbunden bzw. gewünschtenfalls integral ausgebildet und umgibt dieses andere Drehelement 12. In entsprechender Weise ist das weitere Drehelement 58 in seinem vom weiteren Drehelement 56 entfernten Ende mit dem Drehelement 14 fest verbunden oder integral ausgebildet und umgibt aufgrund seiner hohlwellenartigen Ausgestaltung dieses Drehelement 14.

Die beiden weiteren Drehelemente 56 und 58 weisen aufeinander zu gerichtete und in Umfangsrichtung alternierend liegende Drehwinkelbegrenzungsvorsprünge 60 bzw. 62 auf, wobei zwischen jeweils zwei in Umfangsrichtung aufeinander folgenden Drehwinkelbegrenzungsvorsprüngen 60 eine Drehwinkelbegrenzungsaussparung 64 gebildet ist, während zwischen zwei in Umfangsrichtung aufeinander folgenden Drehwinkelbegrenzungsvorsprüngen 62 jeweils eine Drehwinkelbegrenzungsaussparung 66 gebildet ist. Da zwischen den Drehwinkelbegrenzungsvorsprüngen 60, 62, die im Wesentlichen auf gleichem radialen Niveau liegen, Umfangsbewegungsspiel vorhanden ist, können also die beiden weiteren Drehelemente 56, 58 in einem diesem Umfangsbewegungsspiel entsprechenden Relativdrehwinkel bezüglich einander gedreht werden. Wird dieser Relativdrehwinkel erreicht, so wird die im Wesentlichen die Drehwinkelbegrenzungsvorsprünge 60, 62 bzw. Drehwinkelbegrenzungsaussparungen 64, 66 umfassende Relativdrehwinkelbegrenzungsanordnung 68 wirksam und lässt eine weitere Relativdrehung der beiden weiteren Drehelemente 56, 58 nicht zu. Dabei ist der durch die Relativdrehwinkelbegrenzungsanordnung 68 zugelassene Relativdrehwinkelbereich größer, als der Relativdrehwinkel, welchen die Relativdrehwinkelbegrenzungsanordnung 36 in Zuordnung zu den beiden Drehelementen 12, 14 zulässt.

Bei der in den Fig. 5 und 6 gezeigten Ausgestaltungsform ist zumindest eines der Drehelemente 12, 14, vorzugsweise beide, durch entsprechende Dimensionierung bzw. Formgebung so ausgestaltet, dass es ebenfalls um eine Torsionsachse tordierbar ist. Diese kann vorzugsweise auch der Drehachse A bzw. der Torsionsachse des Torsionselements 34 entsprechen. Wird über eine derartige Drehmomentübertragungsanordnung 10 dann ein Drehmoment übertragen, so erfolgt dies zunächst unter Torsion des Torsionselements 34 in demjenigen Winkelbereich, den die Relativdrehwinkelbegrenzungsanordnung 36 zulässt. Steigt das Drehmoment weiter an und wird die Relativdrehwinkelbegrenzungsanordnung 36 wirksam, so wird der weitere Drehmomentenanteil übertragen durch die nunmehr über die Relativdrehwinkelbegrenzungsanordnung 36 bezüglich einander blockierten Drehelemente 12, 14, die jedoch aufgrund ihrer vorangehend beschriebenen Ausgestaltung ebenfalls tordierbar sind. Das heißt, ein weiterer Anstieg des Drehmoments führt nicht mehr zu einer weiteren Torsion des Torsionselements 34, sondern damit einhergehend auch einer Torsion zumindest eines der Drehelemente 12, 14. Dies kann andauern, bis das Drehmoment so groß wird, dass auch die den weiteren Drehelementen 56, 58 zugeordnete Relativdrehwinkelbegrenzungsanordnung 68 wirksam ist und mithin eine weitere Relativdrehung dieser weiteren Drehelemente 56, 58 nicht zulässt und somit auch eine weitere Torsion des Torsionselements 34 und des Drehelements 12 oder/und 14 verhindert.

Auf diese Art und Weise kann eine gestufte Drehschwingungsdämpfungscharakteristik erhalten werden, nämlich in einem ersten Relativdrehwinkelbereich vorgegeben durch die Tordierbarkeit des Torsionselements 34 und einem dann folgenden weiteren Relativdrehwinkelbereich vorgegeben durch die Tortierbarkeit des Torsionselements 34 und weiterhin des Drehelements 12 oder/und 14.

Es ist hier darauf hinzuweisen, dass selbstverständlich diese gestufte Charakteristik noch weitergeführt werden kann, indem zumindest eines der weiteren Drehelemente 56, 58 ebenfalls um eine Torsionsachse tordierbar ist und dann noch weitere Drehelemente und diesen zugeordnet eine Relativdrehwinkelbegrenzungsanordnung vorgesehen sind, die dann wirksam wird, wenn durch Torsion des weiteren Drehelements 56 oder/und 58 ein weiterer Relativdrehwinkelbereich ausgeschöpft ist.

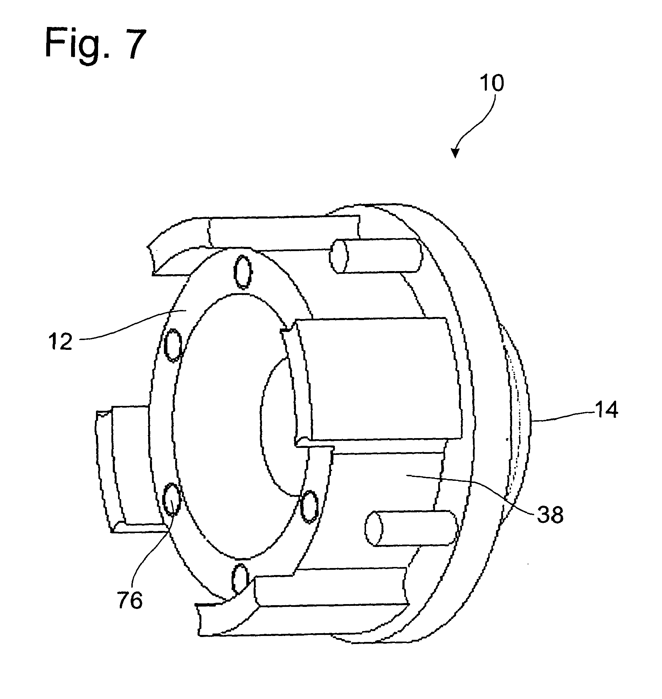

Eine weitere erfindungsgemäß aufgebaute Drehmomentübertragungsanordnung 10 ist in den Fig. 7 bis 9 gezeigt. Bei dieser Drehmomentübertragungsanordnung 10 sind die beiden Drehelemente 12, 14 im Wesentlichen scheibenartig ausgebildet. Das Drehelement 12 weist einen zentralen Vorsprung 70 auf, der sich in eine zentrale Aussparung 72 des Drehelements 14 hinein erstreckt und dort unter Zwischenlagerung eines beispielsweise als Gleitlagerhülse ausgebildeten Lagers 48 abgestützt ist. Durch einen Sicherungsring 74 können die beiden Drehelemente 12, 14 axial bezüglich einander gesichert werden. Das Lager 48 kann sich nach radial außen bis in den zwischen den beiden Drehelementen 12, 14 gebildeten Spalts 28 hinein erstrecken und somit auch eine Axiallagerung der beiden Drehelemente 12, 14 bezüglich einander vorsehen.

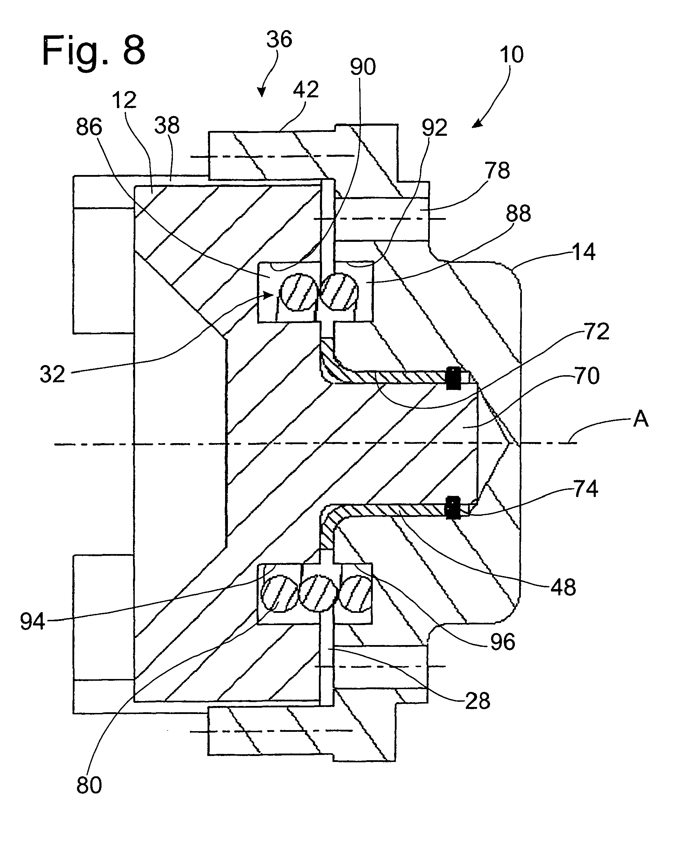

Am Drehelement 14 sind wieder mehrere näherungsweise axial sich erstreckende Drehwinkelbegrenzungsvorsprünge 42 vorgesehen, die in entsprechende Drehwinkelbegrenzungsaussparungen 38 am Drehelement 12 eingreifen. Man erkennt in den Fig. 7 und 8, dass an beiden Drehelementen näherungsweise axial sich erstreckende Durchgangsöffnungen 76 bzw. 78 vorgesehen sind, über welche eine Festlegung durch Schraubbolzen oder dergleichen an mit der Drehmomentübertragungsanordnung 10 zu koppelnden Baugruppen erfolgen kann.

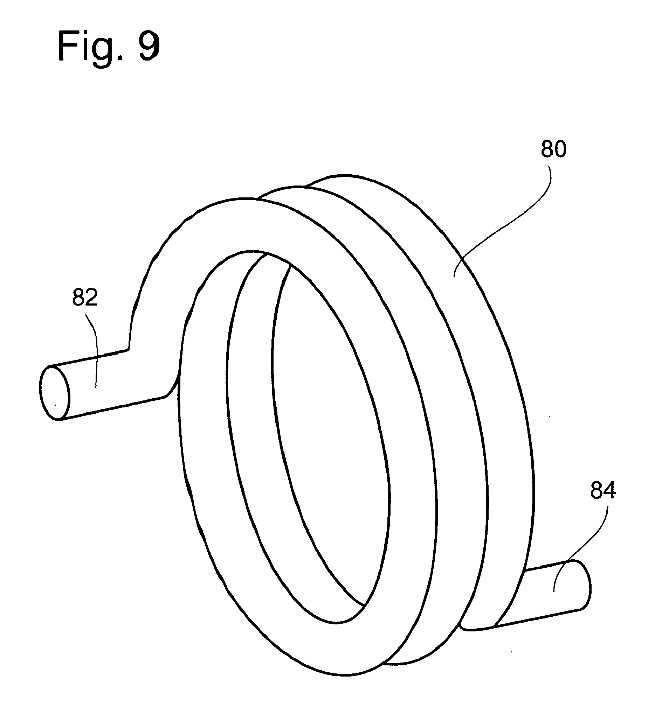

Die Torsionseinheit 32 umfasst bei dieser Ausgestaltungsform eine Schraubenfeder 80, die, wie in Fig. 9 erkennbar, eine Mehrzahl von Federwindungen mit näherungsweise gleichem Windungsdurchmesser aufweisen kann. Die Federenden 82, 84 der Schraubenfeder 80 sind axial abgebogen und können in entsprechende Öffnungen im Drehelement 12 bzw. im Drehelement 14 eingesetzt werden. Auf diese Art und Weise wird beispielsweise das Federende 82 mit dem Drehelement 12 festgekoppelt, während das Federende 84 mit dem Drehelement 14 fest verkoppelt ist. Um die Schraubenfeder 80 aufnehmen zu können, weisen die beiden Drehelemente 12, 14 einander gegenüberliegende und zueinander offene ringartige Aussparungen 86, 88 auf. In diesen Aussparungen 86, 88 ist die Schraubenfeder 80 so aufgenommen, dass sie zu jeweiligen diese außen umgebenden Flächen 90, 92 und von dieser außen umgebenen Flächen 94, 96 der beiden Drehelemente 12, 14 einen radialen Abstand aufweist.

Bei Drehmomentübertragung über die beiden Drehelemente 12, 14 können diese sich bezüglich einander verdrehen, und zwar unter Torsion der Schraubenfeder 80 um ihre Längsachse, die vorzugsweise der Drehachse A entspricht und mithin auch die Torsionsachse dieser Schraubenfeder 80 bildet. Die dabei auftretende Relativdrehung zwischen den Drehelementen 12, 14 ist in einem Winkelbereich möglich, der durch die Ausgestaltung der Drehwinkelbegrenzungsanordnung 36, insbesondere also dem Umfangsbewegungsspiel der Drehwinkelbegrenzungsvorsprünge 42 und den Drehwinkelbegrenzungsaussparungen 38, vorgegeben ist. Auch hier können selbstverständlich elastische Anschlagdämpfungselemente beispielsweise die Vorsprünge 42 umgebend vorgesehen sein.

Die Relativdrehwinkelbegrenzungsfunktion kann bei diesem Aufbau jedoch alternativ oder zusätzlich auch durch die Zusammenwirkung der Schraubenfeder 80 mit den Flächen 90, 92 bzw. 94, 96 erfolgen. Wird die Schraubenfeder 80 nämlich derart auf Torsion belastet, dass ihre Federwindungen sich zuziehen, so nähern sie sich den Flächen 94, 96 an und kommen bei Erreichen eines bestimmten Relativdrehwinkels zwischen den beiden Drehelementen 12, 14 in Anlage an diesen Flächen. Eine weitere Torsion, d. h. ein weiteres Zusammenziehen der Schraubenfeder 80, ist dann nicht möglich, so dass in diesem Zustand die beiden Drehelemente 12, 14 auch nicht mehr bezüglich einander gedreht werden können. Das gesamte Drehmoment wird in diesem Zustand bzw. bei derartiger Ausgestaltung dann aber weiterhin noch über die Schraubenfeder 80 übertragen, nämlich die mit den beiden Drehelementen 12 bzw. 14 gekoppelten Federenden 82, 84. Entsprechendes gilt selbstverständlich auch bei Torsionsbelastung im Sinne einer Aufspreizung der Schraubenfeder 80, wobei diese sich dann gegen die Flächen 90 bzw. 92 anlegen wird.

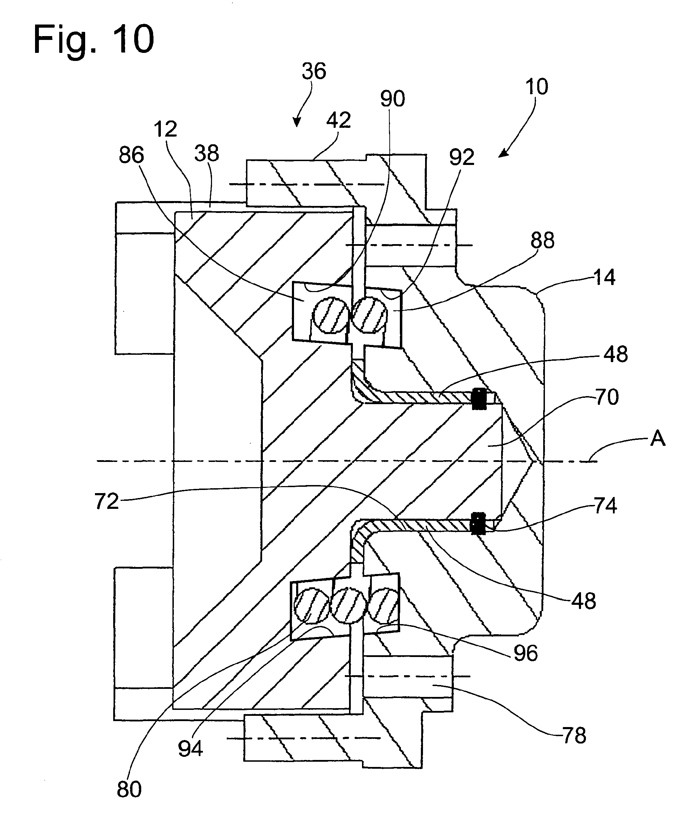

Eine Abwandlung der vorangehend beschriebenen Ausgestaltungsform ist in Fig. 10 gezeigt. Diese entspricht weitestgehend der mit Bezug auf die Fig. 7 bis 9 beschriebenen Ausgestaltungsform, so dass auf die diesbezüglichen Ausführungen verwiesen werden kann. Ein Unterschied besteht jedoch darin, dass, wie in Fig. 10 erkennbar, die Flächen 90, 92 bzw. 94, 96 bezüglich der Drehachse A geneigt sind, also im Wesentlichen als Konusflächen ausgebildet sind.

Dies führt dazu, dass der radiale Abstand zwischen der Schraubenfeder 80 bzw. deren Federwindungen und diesen Flächen 90, 92, 94, 98 in der Längsrichtung der Schraubenfeder 80 und somit auch in Richtung ihrer Torsionsachse variiert. Bei Torsionsbelastung wird die Feder 80 sich zunächst mit denjenigen Bereichen, die einer jeweiligen Fläche 90, 92, 94, 96 näher liegen, an eine derartige Fläche anlegen und in diesen Bereichen dann gegen weitere Torsion blockiert sein. Weiter tordiert werden kann die Feder 80 dann nur noch in demjenigen Längenbereich, der noch nicht gegen eine dieser Flächen 90, 92, 94, 96 anliegt. Auf diese Art und Weise kann der Längenbereich, der zur Bereitstellung der Torsionselastizität beiträgt, abhängig von dem zu übertragenen Drehmoment und somit abhängig vom Relativdrehwinkel der beiden Drehelemente 12, 14 bezüglich einander beeinflusst werden, wodurch selbstverständlich dann auch die Dämpfungscharakteristik beeinflusst wird. Dies kann auch dadurch erlangt werden, dass alternativ oder zusätzlich zur geneigten Ausgestaltung der Flächen 90, 92, 94, 96 die Schraubenfeder 80 nicht mit konstantem Windungsradius, sondern sich über deren Länge änderndem Windungsradius ausgebildet wird. Durch diese Art der Zusammenwirkung der Schraubenfeder 80 mit den beiden Drehelementen 12, 14 kann nicht nur eine drehwinkel- und somit drehmomentenabhängige Variation des Dämpfungsverhaltens erlangt werden, um eine wahlweise degressive oder progressive Dämpfungskennlinie zu erzeugen, sondern auch in der vorangehend beschriebenen Art und Weise eine Drehwinkelbegrenzungsfunktionalität bereitgestellt werden.

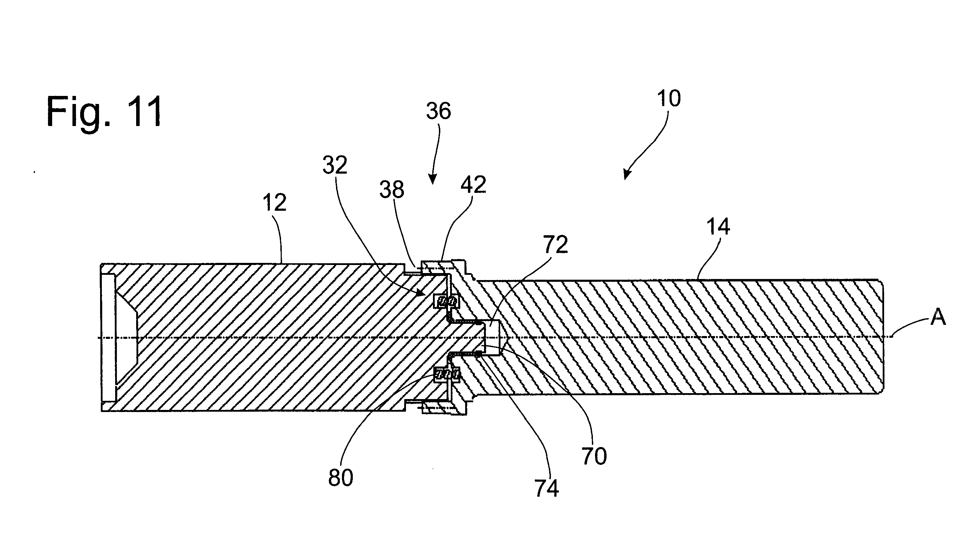

In Fig. 11 ist eine Ausgestaltungsform einer Drehmomentübertragungsanordnung 10 mit einer Schraubenfeder 80 als Torsionselement der Torsionseinheit 32 dargestellt, bei welcher die beiden Drehelemente 12, 14 in Richtung der Drehachse A langgestreckt ausgebildet sind, in ihrem in Wechselwirkung miteinander tretenden Bereich jedoch so aufgebaut sein können, wie vorangehend mit Bezug auf die Fig. 7 bis 10 dargelegt. Diese Ausgestaltungsform bietet sich vor allem in Bereichen an, in welchen ausreichend axialer Bauraum zur Verfügung steht bzw. entsprechende axiale Längenbereiche durch eine derartige Drehmomentübertragungsanordnung zu überbrücken sind. Die Länge bzw. die speziell konstruktive Ausgestaltung der Drehelemente 12, 14 insbesondere in denjenigen Bereich, in welchen dann auch mit anderen Baugruppen zu koppeln sind, ergeben sich daher jeweils durch den speziellen Einsatzzweck.

Bei der Ausgestaltungsform der Drehmomentübertragungsanordnung 10 mit Schraubenfeder kann selbstverständlich auch vorgesehen sein, dass nicht nur eine, sondern beispielsweise zwei und dann vorzugsweise radial ineinander geschachtelte Schraubenfedern mit ihren jeweiligen Federenden an den beiden durch diese zu koppelnden Drehelementen 12 bzw. 14 festgelegt sind. Diese Schraubenfedern wirken dann parallel zueinander, und zwar im gesamten Wirkbereich der Drehmomentübertragungsanordnung bzw. der Dämfpungsfunktionalität. Auf diese Art und Weise kann durch die gezielte Auswahl der so zu kombinierenden Federn bzw. Federkonstanten eine Beeinflussung der Dämpfungscharakteristik in einem weiten Bereich erlangt werden. Dabei kann es vorteilhaft sein, die Federn gegeneinander vorgespannt einzubauen, so dass zunächst ein gewisses Grund-Moment überwunden werden muss, das im Wesentlichen der Vorspannung entspricht, um eine Relativdrehung der Drehelemente zu erlangen. Bei einer weiteren vorteilhaften Variante, welche das Vorhandensein mehrerer parallel wirkender Schraubenfedern nutzt, können die Federn so eingebaut bzw. auch ineinander geschachtelt angeordnet sein, dass sie zueinander gegensinnig gewunden bzw. gewickelt sind. Dies bedeutet, dass bei Relativdrehung der beiden Drehelemente in einer vorgegebenen Richtung eine der Federn so tordiert wird, dass ihr Windungsdurchmesser zunimmt, während die andere der Federn so tordiert wird, dass ihr Windungsdurchmesser abnimmt. Da derartige Federn abhängig davon, in welcher Richtung sie auf Torsion belastet werden, unterschiedliche Kraftkennlinien aufweisen, wird es auf diese Art und Weise möglich, durch geeignete Abstimmung der Federn aufeinander dafür zu sorgen, dass in beiden Relativdrehrichtungen näherungsweise gleiche Kennlinien und mithin näherungsweise gleiche Dämpfungscharakteristiken vorhanden sind. Vor allem bei der radialen Schachtelung von Federn ineinander, also einer Anordnung, bei welcher nicht zwei exakt baugleiche Federn gegensinnig eingebaut werden können, kann diese Abstimmung dadurch erfolgen, dass unterschiedliche Federmaterialien bzw. Querschnittsabmessungen des eingesetzten Federdrahts dazu benutzt werden, die Abstimmung der Kennlinien aufeinander zu realisieren.

Es sei abschließend noch darauf hinzuweisen, dass selbstverständlich die verschiedenen konstruktiven Ausgestaltungen beispielsweise im Bereich der Relativdrehwinkelbegrenzungsanordnungen, jedoch auch im Bereich der Torsionseinheit und deren Zusammenwirken mit den Drehelementen, wie sie in den vorangehend beschriebenen verschiedenen Ausgestaltungsformen gezeigt sind, miteinander kombiniert werden können. Auch ist es selbstverständlich möglich, bei den verschiedenen Ausgestaltungsformen die jeweiligen Torsionselemente so einzugliedern, dass ihre an sich vorgesehene Torsionsachse nicht exakt der Drehachse entspricht, sondern dazu eine gewisse Neigung aufweist. Dies führt dazu, dass zusätzlich zur Torsionsbelastung auch noch eine Biegebelastung oder eine Torsion um eine Achse auftritt, die nicht eine Symmetrieachse des jeweiligen Torsionselements ist.

Weiter wird darauf hingewiesen, dass eine derartige Drehmomentübertragungsanordnung auch in dem Antriebsstrang eines Fahrzeugs integriert werden kann, z. B. als Abtriebsbaugruppe einer Kupplungsscheibe, ggf. zusätzlich zu weiteren Torsionsschwingungsdämpfungsanordnungen im Antriebsstrang.

## Patentansprüche

1. Drehmomentübertragungsanordnung, insbesondere zur Drehmomentübertragung in einem Fahrzeug, umfassend ein erstes Drehelement (12), ein zweites Drehelement (14) und eine Torsionseinheit (32), welche das erste Drehelement (12) und das zweite Drehelement (14) zur gemeinsamen Drehung um eine Drehachse (A) koppelt, wobei die Torsionseinheit (32) wenigstens ein bei Drehung der Drehelemente (12, 14) um die Drehachse (A) und bei zu übertragendem Drehmoment um eine erste Torsionsachse tordierbares Torsionselement (34; 80) umfasst, ferner umfassend eine erste Relativdrehwinkelbegrenzungsanordnung (36) zur Begrenzung des Relativdrehwinkels zwischen dem ersten Drehelement (12) und dem zweiten Drehelement (14).

2. Drehmomentübertragungsanordnung nach Anspruch 1,
**dadurch gekennzeichnet, dass** die erste Torsionsachse im Wesentlichen der Drehachse (A) entspricht.

3. Drehmomentübertragungsanordnung nach Anspruch 1 oder 2,
**dadurch gekennzeichnet, dass** die Torsionseinheit (32) wenigstens ein stabartiges Torsionselement (34) umfasst, das mit einem Stabende (35) am ersten Drehelement (12) festgelegt ist und mit dem anderen Stabende (37) am zweiten Drehelement (14) festgelegt ist.

4. Drehmomentübertragungsanordnung nach Anspruch 3,
**dadurch gekennzeichnet, dass** das erste Drehelement (12) oder/und das zweite Drehelement (14) wenigstens bereichsweise hohlwellenartig ausgebildet ist und in diesem Bereich (20, 22) das stabartige Torsionselement (34) aufnimmt.

5. Drehmomentübertragungsanordnung nach Anspruch 1 oder 2,
**dadurch gekennzeichnet, dass** die Torsionseinheit (32) wenigstens eine Schraubenfeder (80) umfasst, die mit einem Federende (82) am ersten Drehelement (12) festgelegt ist und mit dem anderen Federende (84) am zweiten Drehelement (14) festgelegt ist.

6. Drehmomentübertragungsanordnung nach einem der Ansprüche 1 bis 5,
**dadurch gekennzeichnet, dass** das erste Drehelement (12) oder/und das zweite Drehelement (14) um eine zweite Torsionsachse tordierbar ist, und dass wenigstens ein weiteres erstes Drehelement (56) und wenigstens ein weiteres zweites Drehelement (58) vorgesehen sind, wobei dem wenigstens einen weiteren ersten Drehelement (56) und dem wenigstens einen weiteren zweiten Drehelement (58) eine weitere Relativdrehwinkelbegrenzungsanordnung (68) zugeordnet ist zum Ermöglichen einer Relativdrehung zwischen dem wenigstens einen weiteren ersten Drehelement (56) und dem wenigstens einen weiteren zweiten Drehelement (58) in einem Relativdrehwinkelbereich, welcher größer ist, als der durch die erste Relativdrehwinkelbegrenzungsanordnung (36) ermöglichte Relativdrehwinkel zwischen dem ersten Drehelement (12) und dem zweiten Drehelement (14).

7. Drehmomentübertragungsanordnung nach Anspruch 6,
**dadurch gekennzeichnet, dass** das wenigstens eine weitere erste Drehelement (56) mit dem ersten Drehelement (12) fest verbunden ist und dass das wenigstens eine weitere zweite Drehelement (58) mit dem zweiten Drehelement (14) fest verbunden ist.

8. Drehmomentübertragungsanordnung nach Anspruch 7,
**dadurch gekennzeichnet, dass** das wenigstens eine weitere erste Drehelement (56) oder/und das wenigstens eine weitere zweite Drehelement (58) wenigstens bereichsweise hohlwellenartig ausgebildet ist und in diesem Bereich das erste Drehelement (12) und das zweite Drehelement (14) aufnimmt.

9. Drehmomentübertragungsanordnung nach Anspruch 8,
**dadurch gekennzeichnet, dass** das wenigstens eine weitere erste Drehelement (56) in einem von dem wenigstens einen weiteren zweiten Drehelement (58) entfernten Ende mit dem ersten Drehelement (12) verbunden ist und dass das wenigstens eine weitere zweite Drehelement (58) in einem von dem wenigstens einen weiteren ersten Drehelement (56) entfernten Ende mit dem zweiten Drehelement (14) verbunden ist.

10. Drehmomentübertragungsanordnung nach einem der Ansprüche 6 bis 9,
**dadurch gekennzeichnet, dass** die zweite Torsionsachse im Wesentlichen der Drehachse (A) entspricht.

11. Drehmomentübertragungsanordnung nach einem der Ansprüche 1 bis 10,
**dadurch gekennzeichnet, dass** wenigstens eine Relativdrehwinkelbegrenzungsanordnung (36; 68) an einem der Drehelemente (12, 14; 56, 58) wenigstens einen Drehwinkelbegrenzungsvorsprung (42; 60) umfasst und an dem anderen der Drehelemente (12, 14; 56, 58) in Zuordnung zu jedem Drehwinkelbegrenzungsvorsprung (42, 60) eine diesen mit Umfangsbewegungsspiel aufnehmende Drehwinkelbegrenzungsaussparung (38; 66) umfasst.

12. Drehmomentübertragungsanordnung nach Anspruch 11,
**dadurch gekennzeichnet, dass** im Bereich des wenigstens einen Drehwinkelbegrenzungsvorsprungs (42; 60) oder/und der diesem zugeordneten Drehwinkelbegrenzungsaussparung (38; 66) ein elastisches Anschlagdämpfungselement (54) vorgesehen ist.

13. Drehmomentübertragungsanordnung nach einem der Ansprüche 1 bis 12,
**dadurch gekennzeichnet, dass** wenigstens eine Relativdrehwinkelbegrenzungsanordnung ein Torsionselement (80) der Torsionseinheit (32) umfasst.

14. Drehmomentübertragungsanordnung nach Anspruch 13,
**dadurch gekennzeichnet, dass** das Torsionselement (80) mit wenigstens einem der durch dieses gekoppelten Drehelemente (12, 14) zur Drehwinkelbegrenzung zusammenwirkt.

15. Drehmomentübertragungsanordnung nach Anspruch 14,
**dadurch gekennzeichnet, dass** das wenigstens eine Drehelement (12, 14) eine Torsionsbewegungsbegrenzung für das Torsionselement (80) aufweist.

16. Drehmomentübertragungsanordnung nach Anspruch 5 und 15,
**dadurch gekennzeichnet, dass** die Torsionsbewegungsbegrenzung an dem wenigstens einen Drehelement (12, 14) eine die Schraubenfeder (80) umgebende oder von dieser umgebene Anlagefläche (90, 92, 94, 96) umfasst.

17. Drehmomentübertragungsanordnung nach einem der Ansprüche 1 bis 16,
**dadurch gekennzeichnet, dass** der tordierbare Bereich der Torsionseinheit (32) in Abhängigkeit von dem Relativdrehwinkel der Drehelemente (12, 14) variiert.

18. Drehmomentübertragungsanordnung nach Anspruch 5 und Anspruch 17,
**dadurch gekennzeichnet, dass** an wenigstens einem der durch die wenigstens eine Schraubenfeder (80) gekoppelten Drehelemente (12, 14) eine die wenigstens eine Schraubenfeder (80) umgebende oder von dieser umgebene Anlagefläche (90, 92, 94, 96) vorgesehen ist, die einen in Richtung der ersten Torsionsachse variierenden Abstand zu der wenigstens einen Schraubenfeder (80) aufweist.

19. Drehmomentübertragungsanordnung nach einem der Ansprüche 1 bis 18,
**dadurch gekennzeichnet, dass** das erste Drehelement (12) und das zweite Drehelement (14) vermittels einer Lageranordnung (48) bezüglich einander drehbar abgestützt sind.

20. Drehmomentübertragungsanordnung nach Anspruch 6 oder nach einem der Ansprüche 7 bis 19, sofern auf Anspruch 6 rückbezogen,
**dadurch gekennzeichnet, dass** die Torsionseinheit (32) eine Mehrzahl von vorzugsweise ineinander geschachtelten Schraubenfedern umfasst.

21. Drehmomentübertragungsanordnung nach Anspruch 20,
**dadurch gekennzeichnet, dass** wenigstens zwei der Schraubenfedern bezüglich einander vorgespannt sind.

22. Drehmomentübertragungsanordnung nach Anspruch 20 oder 21,
**dadurch gekennzeichnet, dass** wenigstens zwei der Schraubenfedern mit zueinander gegensinniger Wicklungsrichtung vorgesehen sind.
